# EUROPEAN PATENT SPECIFICATION

(11) **EP 4 029 359 B1**
(45) Date of publication and mention of the grant of the patent: **26.03.2025**
(21) Application number: 22152301.2
(22) Date of filing: 19.01.2022
(51) Int. Cl.: A01B 59/00, A01B 59/06, A01B 71/06

(54) **FRONT LOWER LINKS SYSTEM FOR SUPER STEER AGRICULTURAL VEHICLE AND SUPER STEER AGRICULTURAL VEHICLE INCLUDING THE FRONT LOWER LINKS SYSTEM**
VORDERES UNTERLENKERSYSTEM FÜR LANDWIRTSCHAFTLICHE SUPERLENKFAHRZEUGE UND LANDWIRTSCHAFTLICHE SUPERLENKFAHRZEUGE MIT DEM VORDEREM UNTERLENKERSYSTEM
SYSTÈME DE LIAISONS INFÉRIEURES AVANT POUR VÉHICULE AGRICOLE À SUPER DIRECTION ET VÉHICULE AGRICOLE À SUPER DIRECTION COMPRENANT LE SYSTÈME DE LIAISONS INFÉRIEURES AVANT

(30) Priority: 19.01.2021 IT 202100000845
(43) Date of publication of application: 20.07.2022
(73) Proprietor: CNH Industrial Italia S.p.A., 10156 Torino (IT)
(72) Inventor: HUBER, Karl, 4100 Ottensheim (AT); HUBER, Roland, 4391 Waldhausen (AT); KOECK, Reinhard, 4360 Grein (AT)
(74) Representative: CNH Industrial IP Department

(56) References cited:
- EP-B1- 3 386 287
- WO-A1-2021/146615
- US-A1- 2009 084 566

## Description

### Field of the invention

The present invention relates to the field of the interfaces of agricultural super steer vehicles needed to connect an appliance or implement to the front of the vehicle.

### Description of the prior art

The super steer vehicle are special agricultural vehicles where the entire front axle rotate over a central hinge.

The document EP3386287B1 discloses a known front lower links system.

Therefore, this kind of steering solution differs from the usual solutions where each front wheel is provided with a hinge. The main advantage of the super steer vehicles is the reduced steering angle, so that such vehicles are capable to turn almost on itself. This feature is particularly appreciated at the end of crop rows, when the vehicle has to turn to work further crop rows.

Often the super steer vehicles are capable to carry front appliances or implements, active or passive.

"Active" means that the implement receives the motion from the front PTO, while passive means that the implements is not driven by the vehicle engine, but simply suspended to the front portion of the vehicle.

In order to attach such appliances to the front of the vehicle is provided of the so called Front Hitch Power Lift (FHPL), which includes two hinged and paired arms with an hook at the free end of each arm and a couple of hydraulic actuator suitable to raise/lower the arms.

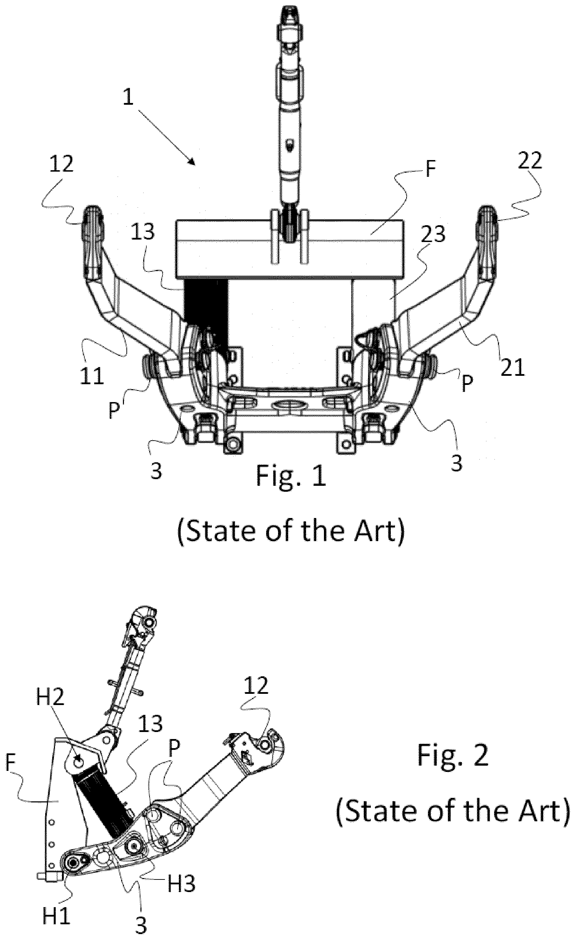

Figures 1 and 2 disclose an example of FHPL of the prior art, according to a frontal view and a corresponding lateral view of the example.

A frame F defines a structure to which hydraulic actuators 13 and 23 and the swinging support 3 are hinged. The swinging support 3 supports the arms 11 and 21 and has a first portion hinged to the frame F and a second portion, opposite to the first one, arranged to support the arms 11 and 21. The first portion, hinged to the frame, defines a hinge axis H1. The hydraulic actuators 13 and 23 are hinged on one end to the frame defining the hinge axis H2, and on the opposite end, to the support 3 defining the hinge axis H3.

The hydraulic actuator motion causes the rotation of the support 3 over the first hinge axis H1.

As clear from figure 1, the two hydraulic actuators are parallel between each other and work constantly at the same manner to rise and lower the support 3 and its arms consequently.

The arms are often interchangeable in order for better adapting to the kind of appliance, especially in case of active appliance for optimizing its connection to the PTO. The arms 12 and 13 are connected to the support 3 by means of a couple of pins P. More in particular the support 3 comprises two forks housing where the arms are inserted and the pins P are inserted transversally in order to lock each arm to the corresponding housing.

However, when a pair of arms is in use, another pair must be stored till a new need. Storing the not-in-use arms is inconvenient.

### Summary of the invention

Therefore, it is the main object of the present invention to provide front lower links system for super steer agricultural vehicle, which overcomes the above problems/drawbacks.

The main principle of the invention is render the extension of the arm adjustable without replacing them through a telescopic configuration. In particular, the support element includes tubular housings, one for each of the arms, such that the arms can be locked though pins in at least two configurations: extracted and retracted.

It should be clear that, according to prior art, each pair of arms has not only its length but also its diverging shape in order to fit the kind of implement to be hooked.

Therefore, in case of diverging tubular housings, the distance between the hooks would change according to the extraction/retraction movement of the arms with respect to the respective housings.

Preferably, the tubular housings are reciprocally parallel such that the extraction/retraction of the arms would not affect the distance between the hooks.

According to another embodiment of the invention, the arms are curved and the hooks are slidably associated to the arms such that it is possible to adapt the distance between the hooks to receive a specific appliance.

Preferably, the arms are L-shaped, such that the free ends of the arms are reciprocally diverging or converging. Advantageously, the distance between the hooks and the extension of the arms are independent conditions between each other, therefore, it is possible to grasp any kind of appliance and to maintain it in at least two conditions: retracted/extracted.

These and further objects are achieved by means of the attached claims. The solution to the technical problem is achieved by the subject-matter of independent claim 1, defining per se the invention. Preferred embodiments of the invention are defined in the dependent claims.

### Brief description of the drawings

The invention will become fully clear from the following detailed description, given by way of a mere exemplifying and non limiting example, to be read with reference to the attached drawing figures, wherein:
- Figs. 1 and 2 show respectively a front and a lateral view of known FHPL system,
- Figs. 3 and 4 disclose respectively a front and lateral view of a preferred FHPL according to the present invention;
- Fig. 5 shows front from bottom view of the same preferred FHPL of figures 3 and 4,
- Fig. 6 shows another perspective view of the example of the previous figures 3 - 5,
- Fig. 7 shows the front transmission of a super steer vehicle to which the FHPL is connected forming one piece,
- Fig. 8 discloses a preferred pin implemented to lock slidably portions of the FHPL of the previous figures 3 - 7.

The same reference numerals and letters in the figures designate the same or functionally equivalent parts.

In order to improve the understanding of the invention, the same reference numeral are used of similar components both for prior art and the example of the present invention. According to the present invention, the term "second element" does not imply the presence of a "first element", first, second, etc.. are used only for improving the clarity of the description and they should not be interpreted in a limiting way.

### Detailed description of the preferred embodiments

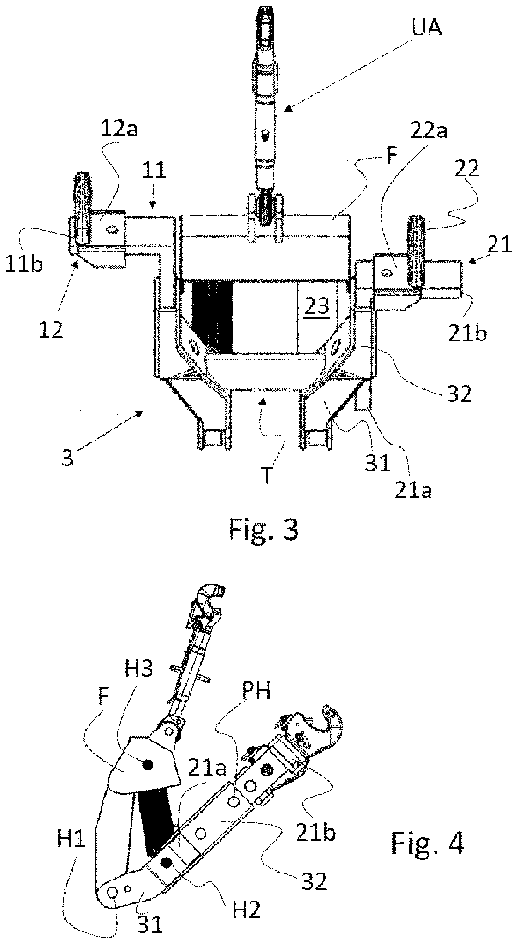

According to figures 3 - 5, the FHPL of the present invention differs from prior art essentially for the support 3, which includes a first portion 31, directly hinged to the frame F, and a second portion 32 including tubular housings arranged to receive the arms 2 in a telescopic fashion.

Preferably, the support 3 defines an (inverted) A-shape with the tubular housings arranged parallel between each other, while the first portion 31 includes two diverging elements and a traverse T connecting the two diverging elements. The traverse is disposed at the interconnection between the diverging elements and the tubular housings. The first hinge axis H1 defines the section where the diversion of the two diverging elements starts.

It should be noted that, considering figure 3, the support 3 is symmetric with respect to a vertical plane including the longitudinal axis X of the vehicle.

Each tubular housing has an inner shape such that to receive the corresponding arm 11, 21 by permitting only a simple sliding movement with a limited the reciprocal play. For example, the inner shape of the tubular housing is parallelepiped as at least a corresponding portion of the arm 11, 21.

In other words, the arms are supported in a telescopic fashion by the support 3.

According to figure 4, the first portion 31 of the support 3 appears to be inclined with the concavity facing forward. This shape permits to limit the height of the FHPL and to guarantee a good clearance of the vehicle from the ground.

The locking system for locking a reciprocal position between an arm and its housing includes at least one pin PN, suitable to fit a passing through opening PH defined by both the tubular housing and the corresponding arm.

The opening PH is arranged transversally to the reciprocal sliding motion of the arm with respect to the corresponding housing.

The same pin(s) PN is used to lock the arm in all the admitted operative positions between the fully extracted and fully retracted operative positions.

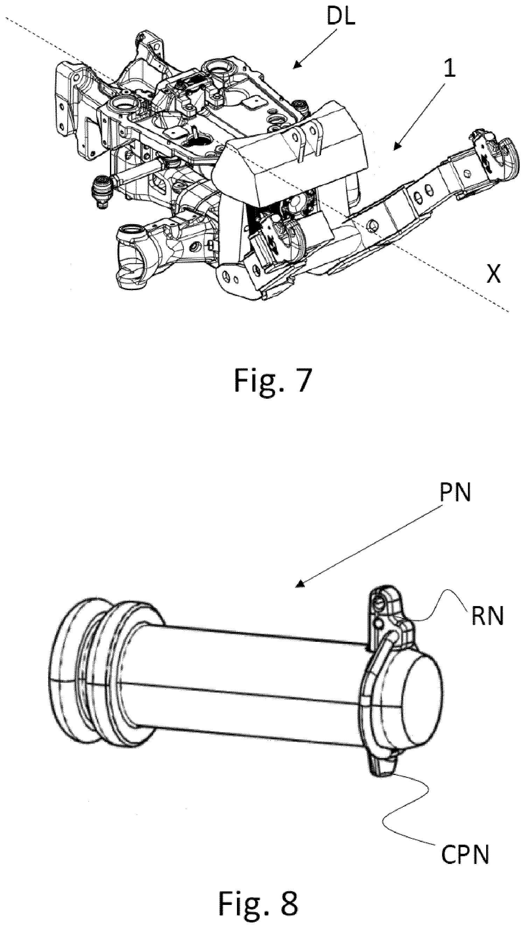

An example of PIN is given on figure 8.

Of course, the arms can be completely extracted by the support 3 for replacing them; however, in such case it does not represent an "operative" configuration. According to the present description an operative configuration refers to the arm fixedly connected to the support 3.

The pin, in turn, includes a cotter pin CPN suitable to avoid any unwanted extraction of the pin from the corresponding opening. The cotter pin is provided of a rotatable hinged ring suitable to be folded on the end of the pin by locking the cotter pin in its seat.

According to the present invention, each arm has a certain number of passing through openings such that to be locked over the corresponding tubular housing in at least two different extraction conditions, such that to define a retracted and an extracted condition.

According to figure 3, the left arm 11 is disclosed in extracted condition, while the right arm 21 is disclosed in retracted condition, to compare the at least two different configurations.

It should be noted that the arms 11 and 21 are L-shaped, according to a preferred embodiment of the invention, and the corresponding hooks 12, 22 are not fixed with the arms as for the prior art, but can be associated to each corresponding arms at different positions in order to vary the distance between the hooks.

Preferably, each hook is affixed on a tubular element 12a, 22a having a symmetry axis perpendicular to the plane including the body of the hook, such that the tubular element can fit the end 11b, 21b of the corresponding arms 11 and 21.

In other words, also the connection between each hook and the corresponding arm is realized in a slidably fashion.

It should be noted that the arms are shaped in both cases, as the male of the coupling with the support 3 and with the hooks 12, 22, which is considered to represent the better solution; however, it could be conceived also a mechanical inversion, where the arms define tubular housings and the support 3 and/or the hooks 12, 22 include a longitudinal element suitable to fit into tubular housings of the arms.

Also the hooks are provided of a lock system for locking the reciprocal position of each hook over the corresponding arm. Also in this case, it is preferable to implement a pin PN as those used to lock the reciprocal position of the arms with respect to the support 3.

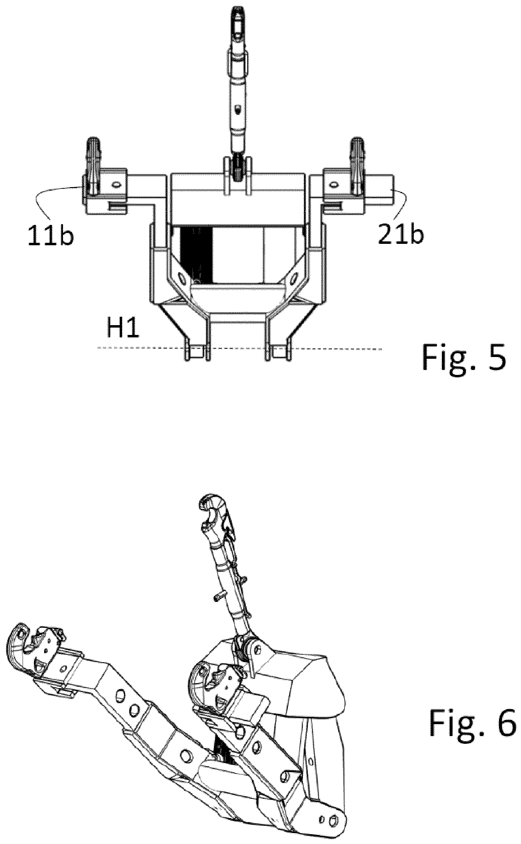

Figure 5 disclose a frontal-bottom view of the FHPL similar to figure 3, where the arms develop the same extension. Also in this case the hooks are disclosed in asymmetric positions only to clarify that their position is not fixed.

The arms are L-shaped and can be coupled with the corresponding tubular housings with the ends 11b and 21b diverging as disclosed in all the figures 3 - 6. However, the L-shaped arms can be exchanged such that the ends are converging. In other words the left arm is put on the right and the right arm is put on the left. Such solution can be useful in accordance with the features of the appliance to be attached to the vehicle.

It should be understood that the 90° L-shape is only optional. Indeed the angle between the two portions of each arm can be larger than 90°. It is clear that the hooks tubular elements 12a, 22a should be inclined with respect to the hook body in such a way to slide over the arms by keeping the hooks body lying in a vertical plane parallel with the longitudinal development X of the vehicle. Therefore, the bend of each arm and the bend of the corresponding hook are reciprocal complimentary.

The FHPL of the present invention, as for prior art, includes at least an actuator 23 to obtain the raising lowering of the arms with respect to the frame F.

As for prior art, the FHPL of the present invention includes an upper arm UA hinged on the top portion of the frame such that the relating hinge axis is parallel with the first hinge axis H1, relating to the support 3.

Figure 7 discloses the front transmission DL of the agricultural vehicle with the FHPL of the present invention. It shows the links to connect and drive in rotation one of the front wheels.

The transmission DL is hinged to the rest of the vehicle (no disclosed) in such a way to rotate around a vertical axis in a known way, so the entire front axle rather than the sole wheels rotates.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well known processes, well-known device structures, and well known technologies are not described in detail.

Many changes, modifications, variations and other uses and applications of embodiments will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Front lower links system (1) for super steer agricultural vehicle including a frame (F), a support (3) hinged to the frame and at least an actuator (23) interposed between the support and the frame to adjust an angular position of the support (3) with respect to the frame (F), the support being arranged to support two arms (11, 21) provided of relating hooks (12, 22),
the arms extension is adjustable in such a way to define at least an operative extracted configuration and an operative retracted configuration of the arms; each arm has a free end provided with a hook (12, 22), wherein the distance between the hooks is adjustable defining at least two operative conditions;
the system is **characterized in that** a stable locking between each arm and corresponding hook is realized by means of at least a pin (P) inserted into a passing through opening, passing through the arm and a corresponding portion (12a, 22a) of the hook, such as to lock any reciprocal movement.

2. System according to any one of previous claims, wherein the connection between each arm and the support (3) is realized in a telescopic fashion.

3. System according to any one of previous claims, wherein the connection between each arm and the corresponding hook is realized in a telescopic fashion.

4. System according to any one of the previous claims, wherein a stable locking between each arm and the support (3) is realized by means of at least a pin (PN) to be inserted into a passing through opening, passing through the arm and a corresponding housing of the support, such as to lock any reciprocal movement.

5. System according to any one of preceding claims, wherein the support (3) is A-shaped with a first portion (31) directly hinged to the frame (F) including two diverging elements and two tubular housings (32) connected to the diverging element and a traverse (T) with the opposite ends connected at the interconnection between each diverging element and the tubular housing (32).

6. System according to any one of the preceding claims, wherein the adjustable movement of each arm is perpendicular to the adjustable movement of each corresponding hook in order to permit independent adjustment of arm length from hooks reciprocal distance.

7. System according to claim 6, wherein each arm is L-shaped, with a first portion (21a) arranged to fit a corresponding support housing and a second portion (21b) arranged to fit a sleeve portion (22a) of the corresponding hook (22).

8. Super steer agricultural vehicle including a front lower links system according to any one of the previous claims 1 - 7.

## Patentansprüche

1. Vorderes Unterlenkersystem (1) für ein landwirtschaftliches Superlenkfahrzeug mit einem Rahmen (F), einer Halterung (3), die mit dem Rahmen schwenkbar verbunden ist, und mindestens einer Betätigungseinrichtung (23), die zwischen der Halterung und dem Rahmen angeordnet ist, um eine Winkelposition der Halterung (3) bezüglich des Rahmens (F) einzustellen, wobei die Halterung vorgesehen ist, um zwei Arme (11, 21) zu halten, die mit jeweiligen Haken (12, 22) versehen sind, wobei die Armlängen derart einstellbar sind, dass mindestens eine ausgezogene Betriebskonfiguration und eine eingezogene Betriebskonfiguration der Arme definiert wird;
wobei jeder Arm ein freies Ende aufweist, das mit einem Haken (12, 22) versehen ist, wobei der Abstand zwischen den Haken einstellbar ist, sodass mindestens zwei Betriebszustände definiert werden;
wobei das System **dadurch gekennzeichnet ist, dass** eine feste Verriegelung zwischen jedem Arm und dem entsprechenden Haken durch mindestens einen Bolzen (P) erfolgt, der in eine Durchgangsöffnung eingesetzt wird, und der sich durch den Arm und einen entsprechenden Abschnitt (12a, 22a) des Hakens derart erstreckt, dass eine Hin- und Herbewegung blockiert wird.

2. System nach einem der vorhergehenden Ansprüche, wobei die Verbindung zwischen jedem Arm und der Halterung (3) eine teleskopische Verbindung ist.

3. System nach einem der vorhergehenden Ansprüche, wobei die Verbindung zwischen jedem Arm und dem entsprechenden Haken eine teleskopische Verbindung ist.

4. System nach einem der vorhergehenden Ansprüche, wobei eine feste Verriegelung zwischen jedem Arm und der Halterung (3) durch mindestens einen Bolzen (PN) erfolgt, der in eine Durchgangsöffnung eingesetzt wird und der sich durch den Arm und ein entsprechendes Gehäuse der Halterung erstreckt, sodass eine Hin- und Herbewegung blockiert wird.

5. System nach einem der vorhergehenden Ansprüche, wobei die Halterung (3) A-förmig ausgebildet ist, mit einem ersten Abschnitt (31), der direkt mit dem Rahmen (F) schwenkverbunden ist, die zwei auseinanderlaufende Elemente und zwei rohrförmige Gehäuse (32) umfasst, die mit den auseinanderlaufenden Elementen verbunden sind, und eine Querverbindung (T), deren gegenüberliegende Enden mit den Verbindungsabschnitten zwischen jedem auseinanderlaufenden Element und dem rohrförmigen Gehäuse (32) verbunden sind.

6. System nach einem der vorhergehenden Ansprüche, wobei die einstellbare Bewegung eines jedem Arms senkrecht zur einstellbaren Bewegung eines jeden entsprechenden Hakens erfolgt, um eine Einstellung der Armlänge zu ermöglichen, die unabhängig von dem Abstand der Haken zueinander ist.

7. System nach Anspruch 6, wobei jeder Arm L-förmig ausgebildet ist, wobei ein erster Abschnitt (21a) derart vorgesehen ist, dass er in ein entsprechendes Haltegehäuse passt, und ein zweiter Abschnitt (21b) derart vorgesehen ist, dass er in einen Hülsenabschnitt (22a) des entsprechenden Hakens (22) passt.

8. Landwirtschaftliches Superlenkfahrzeug mit einem vorderen Unterlenkersystem nach einem der vorhergehenden Ansprüche 1 bis 7.

## Revendications

1. Système de maillons inférieurs avant (1) pour véhicule agricole à rayon de braquage très court comprenant un châssis (F), un support (3) articulé sur le châssis et au moins un actionneur (23) interposé entre le support et le châssis pour régler une position angulaire du support (3) par rapport au châssis (F), le support étant agencé pour supporter deux bras (11, 21) munis de crochets afférents (12, 22), l'extension des bras est réglable de manière à définir au moins une configuration de fonctionnement des bras en position étendue et une configuration de fonctionnement des bras en position rétractée;
chaque bras a une extrémité libre munie d'un crochet (12, 22), la distance entre les crochets est réglable et définit au moins deux états de fonctionnement;
le système est **caractérisé en ce qu'**un verrouillage stable entre chaque bras et le crochet correspondant est réalisé à l'aide d'au moins une broche (P) insérée dans une ouverture traversante, traversant le bras et une portion correspondante (12a, 22a) du crochet, de manière à bloquer tout mouvement réciproque.

2. Système selon l'une quelconque des revendications précédentes, dans lequel le raccordement entre chaque bras et le support (3) est réalisé de manière télescopique.

3. Système selon l'une quelconque des revendications précédentes, dans lequel le raccordement entre chaque bras et le crochet correspondant est réalisé de manière télescopique.

4. Système selon l'une quelconque des revendications précédentes, dans lequel un verrouillage stable entre chaque bras et le support (3) est réalisé à l'aide d'au moins une broche (PN) à insérer dans une ouverture traversante, traversant le bras et un boîtier correspondant du support, de manière à bloquer tout mouvement réciproque.

5. Système selon l'une quelconque des revendications précédentes, dans lequel le support (3) est en forme de A avec une première partie (31) directement reliée de manière articulée au niveau du châssis (F) comprenant deux éléments divergents et deux boîtiers tubulaires (32) reliés à l'élément divergent et une traverse (T) dont les extrémités opposées sont reliées au niveau de l'interconnexion entre chaque élément divergent et le boîtier tubulaire (32).

6. Système selon l'une quelconque des revendications précédentes, dans lequel le mouvement réglable de chaque bras est perpendiculaire au mouvement réglable de chaque crochet correspondant afin de permettre un réglage indépendant de la longueur du bras à partir de la distance réciproque des crochets.

7. Système selon la revendication 6, dans lequel chaque bras est en forme de L, avec une première partie (21a) agencée pour s'adapter à un boîtier de support correspondant et une seconde partie (21b) agencée pour s'adapter à une partie de manchon (22a) du crochet (22) correspondant.

8. Véhicule agricole à rayon de braquage très court comprenant un système de maillons inférieurs avant selon l'une quelconque des revendications 1 à 7 précédentes.
